# EUROPÄISCHE PATENTSCHRIFT

(11) **EP 1 556 900 B1**
(45) Veröffentlichungstag und Bekanntmachung des Hinweises auf die Patenterteilung: **06.05.2009**
(21) Anmeldenummer: 03808673.2
(22) Anmeldetag: 09.10.2003
(51) Int. Cl.: H01L 31/00, H01L 21/66, G01N 21/00

(54) **ZERSTÖRUNGSFREIES ANALYSEVERFAHREN ZUR GÜTEERMITTLUNG EINER SOLARZELLE UND ANWENDUNG DAVON.**
NON-DESTRUCTIVE ANALYSIS METHOD FOR DETERMINING THE QUALITY OF A SOLAR CELL, AND APPLICATION OF THE SAME
PROCEDE D'ANALYSE NON DESTRUCTIF POUR DETERMINER LA QUALITE D'UNE PILE SOLAIRE, ET SON APPLICATION

(30) Priorität: 13.10.2002 DE 10248504
(43) Veröffentlichungstag der Anmeldung: 27.07.2005
(73) Patentinhaber: Helmholtz-Zentrum Berlin für Materialien und Energie GmbH, 14109 Berlin (DE)
(72) Erfinder: LUCK, Ilka, 10119 Berlin (DE); RUDIGIER-VOIGT, Eveline, 55128 Mainz (DE); SCHEER, Roland, 10119 Berlin (DE)
(74) Vertreter: Rudolph, Margit
(86) Internationale Anmeldenummer: PCT/DE2003/003372
(87) Internationale Veröffentlichungsnummer: WO 2004/036656

(56) Entgegenhaltungen:
- ZHOU Z B ET AL: "Schottky solar cells with amorphous carbon nitride thin films prepared by ion beam sputtering technique" SOLAR ENERGY MATERIALS AND SOLAR CELLS, ELSEVIER SCIENCE PUBLISHERS, AMSTERDAM, NL, Bd. 70, Nr. 4, 1. Januar 2002 (2002-01-01), Seiten 487-493, XP004311849 ISSN: 0927-0248
- MA Z Q ET AL: "Boron-doped diamond-like amorphous carbon as photovoltaic films in solar cell" SOLAR ENERGY MATERIALS AND SOLAR CELLS, ELSEVIER SCIENCE PUBLISHERS, AMSTERDAM, NL, Bd. 69, Nr. 4, November 2001 (2001-11), Seiten 339-344, XP004254741 ISSN: 0927-0248
- NOLLET P ET AL: "Importance of air ambient during CdCl2 treatment of thin film CdTe solar cells studied through temperature dependent admittance spectroscopy" CONFERENCE RECORD OF THE 29TH IEEE PHOTOVOLTAIC SPECIALISTS CONFERENCE - 2002. (PVSC). NEW ORLEANS, LA, MAY 19 - 24, 2002, IEEE PHOTOVOLTAIC SPECIALISTS CONFERENCE, NEW YORK, NY: IEEE, US, Bd. CONF. 29, 19. Mai 2002 (2002-05-19), Seiten 704-707, XP010666340 ISBN: 0-7803-7471-1
- KUBO W ET AL: "QUASI-SOLID-STATE DYE-SENSITIZED TIO2 SOLAR CELLS: EFFECTIVE CHARGE TRANSPORT IN MESOPOROUS SPACE FILLED WITH GEL ELECTROLYTES CONTAINING IODIDE AND IODINE" JOURNAL OF PHYSICAL CHEMISTRY. B, MATERIALS, SURFACES, INTERFACES AND BIOPHYSICAL, WASHINGTON, DC, US, Bd. 105, Nr. 51, 2001, Seiten 12809-12815, XP001172443 ISSN: 1089-5647
- DEIBEL C ET AL: "Deep-levels in stoichiometry-varied Cu(In,Ga)(S,Se)2 solar cells" PREPARATION AND CHARACTERIZATION, ELSEVIER SEQUOIA, NL, Bd. 431-432, 1. Mai 2003 (2003-05-01), Seiten 163-166, XP004428626 ISSN: 0040-6090
- FALARAS P ET AL: "DYE-SENSITIZATION OF TITANIUM DIOXIDE THIN FILMS BY RU(II)-BPP-BPY COMPLEXES" PROCEEDINGS OF THE SPIE, SPIE, BELLINGHAM, VA, US, Bd. 4801, 2003, Seiten 125-135, XP008024815 ISSN: 0277-786X

## Beschreibung

Die Erfindung bezieht sich auf ein zerstörungsfreies Analyseverfahren zur Güteermittlung einer Solarzelle mittels einer Datenkombination aus einer optischen Ramanspektroskopie zur Ermittlung der strukturellen Eigenschaften einer Halbleiterschicht und auf Anwendungen davon.

Ein Schwerpunkt auf dem Gebiet der Halbleitermaterialien ist deren Verarbeitung zu Solarzellen, insbesondere Dünnschichtsolarzellen. Hierfür werden fortlaufend neue industrierelevante Herstellungsprozesse entwickelt und erprobt. Wichtige Kriterien sind hierbei die Prozessausbeute und die Prozesszuverlässigkeit, aber auch die Zuverlässigkeit der hergestellten Produkte. Daher werden parallel geeignete Methoden für Prozesskontrollen sowie für die Qualitätssicherung und Diagnostik erforscht. Dabei wird unterschieden zwischen in- und ex-situ-Methoden, die innerhalb einer Herstellungsphase oder nach deren Abschluss durchgeführt werden. Um aber für eine Weiterverarbeitung tauglich zu sein, muss die hergestellte Halbleiterschicht bestimmte Gütekriterien erfüllen. In der Praxis werden bislang in der Regel Gütekontrollen erst nach der Fertigstellung der kompletten Solarzelle durchgeführt, was zu relativ hohen Ausschussraten und unnötigem Material- und Zeiteinsatz führt. Bisher werden bei der Solarzellenherstellung nicht bereits direkt nach der Präparation der aktiven Halbleiterschicht (Absorberpräparation) Aussagen über deren Qualität getroffen, sondern am Prozessende. Falsch eingestellte Prozessparameter oder Probleme bei der Absorberpräparation können also erst am Prozessende festgestellt werden, was unter Umständen unnötige Produktionsschritte nach sich zieht und eine Identifikation des entsprechenden Problems langwieriger macht. Gerade für Fertigungslinien ("in-line"-Produktionen) ist es aber wünschenswert, eine zerstörungsfreie Gütekontrolle möglichst früh, insbesondere direkt nach der Herstellung einer relevanten Halbleiterschicht, in die Fertigungslinie zu integrieren, um unnötige weitere Verarbeitungsschritte an der Halbleiterschicht zu vermeiden, wenn sich deren mindere Qualität bei der Gütekontrolle herausgestellt hat.

Zur Beurteilung der Qualität einer Halbleiterschicht können verschiedene Kriterien herangezogen werden, die sich auf unterschiedliche Eigenschaften des Halbleitermaterials beziehen. Zur Untersuchung der Güte von Solarzellen werden sogenannte "Strom-Spannungs-Kennlinien" (I-V-Kennlinien) unter Beleuchtung aufgenommen. Diese nichtlinearen Kennlinien geben Auskunft über die elektrischen Eigenschaften der Solarzelle. Bei den entsprechenden Kenngrößen handelt es sich um den Wirkungsgrad, der sich als Quotient aus der maximal abgegebenen elektrischen Leistung zur eingestrahlten Lichtleistung ergibt, die Leerlaufspannung ("offene Klemmenspannung"), den Kurzschlussstrom und Strom und Spannung am Punkt maximaler Leistung. Aus dem Quotienten der maximalen Leistung zur lastfreien Leistung berechnet sich der sogenannte "Füllfaktor", der wesentlich durch die Rekombination der Ladungsträger sowie durch Parallel- und Serienwiderstände bestimmt wird. Die Ermittlung derartiger Strom-Spannungs-Kennlinien erfolgt mit einem standardisierten Strom-Spannungs-Messverfahren unter Beleuchtungseinfluss, bei dem an den p-n-Übergang der Solarzelle ein elektrisches Feld über Elektroden angelegt wird. Ein derartiges einfaches Messverfahren kann durch Verwendung mobiler Ausleselektroden auch zerstörungsfrei arbeiten, wobei es in der Regel an einem Solarsimulatormessplatz mit einer temperierten Probenaufnahme durchgeführt wird. Es wird in der Praxis üblicherweise zur Gütebestimmung von fertigprozessierten Solarzellen verwendet, was jedoch die bereits erwähnten Nachteile, insbesondere eine hohe Ausschussrate, mit sich bringt (vergleiche beispielsweise **Veröffentlichung I** "Erfahrungen beim Aufbau einer Produktionsstätte für kristalline Siliziumsolarzellen" von H. Nussbaumer, 11.Juni 2002, pp 22-30, im Internet abrufbar unter (Stand 11.10.2002) : www.ntb.ch/ems/vortrag/ Vo12_ppt_solarzellenproduktion_nussbaumer.pdf ).

Eine Überprüfung und Ermittlung der elektronischen Eigenschaften einer Halbleiterschicht kann mit dem Messverfahren der Admittanzspektroskopie erfolgen. Hiermit werden Informationen über elektrisch aktive Defektzustände und über die Beschaffenheit der Heteroübergänge in der hergestellten Halbleiterschicht durch eine Messung des frequenz- und temperaturabhängigen komplexen Wechselstromleitwerts erhalten. Dabei erfolgt eine Messung der Zeitentwicklung der Raumladungszonen-Kapazität durch Bestimmung des Imaginärwerts der Admittanz. Aus der **Veröffentlichung II** : "Defect Distribution of CuInS2 Solar Cells from Different Preparation Processes as Determined by Admittance Spectroscopy" von K.Siemer et al. (veröffentlicht auf : 12 th International Conference on Temary & Multinary Compounds (ICTMC12), Taiwan, 5-15 June 2000) ist außerdem ein Zusammenhang der Defektdichte in einer Absorberschicht mit der Leerlaufspannung der fertigprozessierten Solarzelle bekannt. Allerdings handelt es sich hierbei um eine in der Anwendung komplizierte und aufwändige Methode, die Temperaturen von bis zu 50K benötigt und zumeist nicht zerstörungsfrei arbeitet, sodass sie für eine Einbeziehung in das eingangs erwähnte zerstörungsfreie Analyseverfahren zur Güteermittlung von Halbleiterschichten nicht geeignet ist.

Weiterhin existieren zur Qualitätskontrolle von Halbleiterschichten noch eine Reihe von optischen Verfahren. Ein solches Verfahren, das insbesondere in-situ während des Aufwachsens einer Halbleiterschicht zur Prozesssteuerung genutzt wird, ist die Methode der Laserlichtstreuung. Hier wird die Oberfläche der Halbleiterschicht mit einem Laserstrahl abgetastet und das von der Oberfläche rückgestreute Licht registriert. So können auftretende Phasenänderungen beim Schichtenwachstum, die eine Veränderung der Oberflächenrauigkeit im Mikrometerbereich hervorrufen, in-situ detektiert und beispielsweise den aktuell herrschenden Temperaturen zugeordnet werden. Zusätzlich kann dieses Verfahren mit Leitfähigkeitsmessungen gekoppelt werden (vergleiche **Veröffentlichung III** : "Chalkopyrit-Solarzellen : In-situ-Prozesskontrolle und Dotierung" von R. Scheer et al., aus Hahn-Meitner-Institut Berlin GmbH Ergebnisbericht - Forschung und Entwicklung 2000, pp 113-114). Ein Nachteil ist hier allerdings, dass dieses Verfahren keinen Zugang zu den strukturellen Eigenschaften der Absorberschicht selbst bietet. Das Dokument z.B. Zhou et. al., Solar Energy Materials and Solar Cells, Elsevier Science Publishers, Amsterdam, seiten 487-493, (01.01. 2002) beschreibt die Raman-Spektroscopie von Solarzellen. Das Dokument z.Q. Ma et al., Solar Energy Materials and Soler Cells, Elsevier Science Publishers, Amsterdam, Seiten 339-344 (November 2001) beschreibt die Raman-Spektroscopie einer Solarzelle aus Dünnfilm. Analytische Aussagen über die strukturelle Zusammensetzung und die kristallinen Eigenschaften einer Halbleiterschicht können hingegen mit dem Messverfahren der Ramanspektroskopie (auch "µ-Ramanspektroskopie") getroffen werden. Hierbei handelt es sich um eine strukturanalytische Methode, die seit der Verwendung von Laserlichtquellen zur Erzeugung von Raman-Streustrahlung weite Verbreitung gefunden hat. Da der Raman-Effekt durch Streuung am Kristallgitter hervorgerufen wird, wird bei der Detektion des gestreuten Lichtes die Kristallperfektion und Kristallorientierung erfasst. Somit steht mit der Ramanspektroskopie eine Methode zur Verfügung, die eine schnelle, zerstörungsfreie und damit eine in eine Halbleiterfertigungslinie integrierbare Qualitätskontrolle sowie eine Prozesssteuerung ermöglicht. Im detektierten Ramanspektrum tritt in Abhängigkeit von dem Halbleitermaterial eine charakteristische Intensitätsspitze auf. Deren Halbwertsbreite (FWHM) ist eine charakteristische Kenngröße für die kristallinen Eigenschaften (Strukturparameter) einer prozessierten Halbleiterschicht, wie es beispielsweise aus der **Veröffentlichung IV** "Quality control and reliability of thin solar cells" von R. Scheer et al. (aus Hahn-Meitner-Institut Berlin GmbH Annual Reports - Selected Results 2001, p 122) bekannt ist. In dieser Veröffentlichung, von der die vorliegende Erfindung als nächstliegendem Stand der Technik ausgeht, wird ein Zusammenhang zwischen der Halbwertsbreite und dem Dotierungsgehalt, das heißt dem möglichen Auftreten einer vom Dotierungsgehalt abhängigen Defektphase (CuAu), in einer speziellen Halbleiterschicht hergestellt und eine entsprechende in-situ-Prozesskontrolle abgeleitet. Dabei kann die Defektphase durch Beugung von Röntgenstrahlung (XRD) als in-situ-Messmethode ermittelt werden. Ein Rückschluss ex-situ auf die elektrischen Eigenschaften einer auf der Halbleiterschicht als Absorberschicht aufgebauten, fertigprozessierten Solarzelle, kann durch die Verfahrenskombination nicht abgeleitet werden. Dies gilt um so mehr, wenn keine Defektphase in der Absorberschicht auftritt.

Aus der DE 198 40 197 A1 ist ein Verfahren zur schnellen und zerstörungsfreien Erkennung und Charakterisierung von Kristalldefekten in monokristallinem Halbleitermaterial bekannt, bei dem der Probenkörper mit Ramanspektroskopie untersucht wird. Dabei bezieht sich die Auswertung des Ramanspektrums sowohl auf monokristalline Kristalle und deren bulk-Eigenschaften, wie beispielsweise Punktdefektcluster, Voids und Sauerstoffausscheidungen, als auch auf Siliziumwafer und die dort ablaufenden Phasentransformationen, wie sie bei mechanischen und chemischen Bearbeitungsschritten sowie Wärmebehandlungen auftreten können. Die Ramanspektroskopie kann deshalb zur Optimierung von Prozesssequenzen und - parametern in Linienfertigungen eingesetzt werden. Weiterhin ist aus der genannten Druckschrift bekannt, die Ramanspektroskopie mit anderen Messmethoden koppeln zu können, beispielsweise mit Leitfähigkeitsmessungen während Eindruck-Härteprüfungen, die nicht zerstörungsfrei sind. Dabei handelt es sich jedoch nicht um Messmethoden, die einer elektrischen Charakterisierung beispielsweise einer Solarzelle dienen, sondern um solche, die mit der Ramanspektroskopie zusammen Aussagen über vorhandene Kristalldefekte liefern.

Andere Messmethoden, mit denen die Ramanspektroskopie kombiniert werden kann, um Aussagen über die strukturellen Eigenschaften der Halbleiterschicht zu erhalten, sind aus der DE 198 27 202 A1 bekannt. In dieser Druckschrift wird ein Verfahren zur Erkennung und Charakterisierung von Kristalldefekten in monokristallinem Halbleitermaterial, insbesondere Siliziumwafern, offenbart, das eine Kombination der Photolumineszenz-Heterodyn-Spektroskopie (Konversionskoeffizient), der photothermischen Heterodyn-Spektroskopie (Lumineszenzausbeute) und dem SIRD-Verfahren (Depolarisationsgrad) umfasst, wobei es sich ausschließlich um Messverfahren zur strukturellen Charakterisierung von Halbleitermaterial handelt. Bei dem Konversionskoeffizienten handelt es sich insofern um einen elektrischen Parameter, als bei der Messmethode mit Laserlichtbestrahlung Responsewellen im Halbleitermaterial hervorgerufen werden, die zu einer gegenphasigen Modulation der dielektrischen Eigenschaften des Kristalls führen. Der Konversionskoeffizient als Messgröße gibt den Anteil der Laserlichtausbeute an, welcher pro absorbierter Laserleistungsdichte im Messobjekt durch die Wechselwirkung mit dem Messobjekt in die Differenzfrequenz konvertiert wird. Somit handelt es sich auch hierbei um eine strukturelle Kenngröße des Halbleitermaterials, die einen Zugriff auf existierende elektrische Defekte erlaubt. Weiterhin arbeiten diese aufwändigen Verfahren, die zur Analyse immer gemeinsam und ausschließlich auf monokristallines Halbleitermaterial angewendet werden, meist nicht zerstörungsfrei und sind somit auch nicht in eine Linienfertigung integrierbar. Ein Rückschluss von der mit diesem bekannten Verfahren ermittelbaren strukturellen Charakterisierung eines Halbleitermaterials auf dessen charakteristische elektronische Parameter und die elektrischen Eigenschaften einer auf der Halbleiterschicht aufgebauten, fertigprozessierten Solarzelle ist hierbei ebenfalls nicht möglich.

Ausgehend von dem bekannten Stand der Technik ist es daher die **Aufgabe** für die vorliegende Erfindung, ein Analyseverfahren der eingangs beschriebenen Art anzugeben, das basierend auf der aktuellen Kenntnis der Strukturparameter einer Halbleiterschicht hochwertige Rückschlüsse auf die elektrischen Eigenschaften einer auf der Halbleiterschicht aufgebauten Solarzelle zulässt. Dabei soll das möglichst einfache und in seiner Umsetzung kostengünstige Analyseverfahren schnell und zerstörungsfrei arbeiten und auf beide kristallinen (mono- und polykristallin) Erscheinungsformen von Halbleitermaterial als Absorberschicht in der Solarzelle anwendbar sein. Weiterhin soll eine Integration in eine Fertigungslinie durch Untersuchung gerade fertiggestellter Halbleiterschichten vor dem nächsten Arbeitsschritt möglich sein. In einer Erweiterung der Anforderungen an die Erfindung soll es auch möglich sein, einen Zusammenhang mit den elektronischen Eigenschaften der Absorberschicht herzustellen, um die Rückschlüsse noch zu unterstützen.

Die Lösung für diese Aufgabe besteht erfindungsgemäß in einem zerstörungsfreien Analyseverfahren wie im Anspruch 1 beschrieben.

Bei dem erfindungsgemäßen Analyseverfahren werden erstmals die strukturellen Eigenschaften einer Halbleiterschicht in Zusammenhang mit den elektrischen Eigenschaften einer auf der Halbleiterschicht als Absorberschicht aufbauenden Solarzelle gebracht. Damit wird es möglich, direkt nach der Herstellung der Absorberschicht durch einfache Ermittlung der strukturellen Schichteigenschaften mittels Ramanspektroskopie auf die späteren elektrischen Eigenschaften der fertigprozessierten Solarzelle zu schließen. Mit dem erfindungsgemäßen Analyseverfahren ist eine einfach und schnell anzuwendende sowie zerstörungsfreie Qualitätskontrolle direkt nach der Herstellung (ex-situ) einer Absorberschicht möglich, mit der über die aktuellen Strukturparameter direkt auf die zu erwartende, ausschlaggebende Qualität der Solarzelle geschlossen werden kann. Dazu muss lediglich an der aktuell hergestellten Absorberschicht eine Ramananalyse durchgeführt werden, sodass nur ein Messverfahren aus der Kombination im Analyseverfahren konkret angewendet werden muss. Die aus den aktuell erhaltenen Messdaten abgeleiteten Strukturarameter werden dann nur noch mit für eine Solarzelle mit dem entsprechenden Halbleiterschichttyp als Absorber bekannten charakteristischen Parametern für die elektrischen Eigenschaften ("Elektroparameter") beispielsweise grafisch oder numerisch korreliert, um eine zutreffende Prognose über die Güte der fertigprozessierten Solarzelle zu erhalten. Dabei können die charakteristischen Parameter für die elektrischen Eigenschaften beispielsweise aus Messungen an entsprechenden Materialproben unter Varianz der beeinflussenden Umgebungsparameter gewonnen werden. Somit werden bei der Erfindung die mit der Ramanspektroskopie kombinierten Messverfahren zur Erarbeitung von Vergleichswerten herangezogen und gleichsam als datengebende Hintergrundverfahren eingesetzt, wodurch sich für die praktische Anwendung des erfindungsgemäßen Analyseverfahrens eine bedeutsame Vereinfachung ergibt.

Die Güteeinstufung einer fertigprozessierten Solarzelle kann noch aussagekräftiger gemacht werden, wenn gemäß einer Erfindungsfortführung bei dem zerstörungsfreien Analyseverfahren eine zusätzliche Datenkombination aus einer Admittanzspektroskopie unter Temperatureinfluss zur Ermittlung der elektronischen Eigenschaften einer Halbleiterschicht und eine Korrelation und Auswertung der aktuellen Strukturarameter mit in Abhängigkeit vom Halbleiterschichttyp vorgegebenen charakteristischen Elektronikparametern zur Verifizierung der Prognose erfolgt. Dabei werden die Aussagen über die elektronischen Eigenschaften der hergestellten Absorberschicht in der Solarzelle zur Verifizierung und Bestärkung der Erkenntnisse über deren zu erwartende elektrische Eigenschaften herangezogen. Im Verfahrensablauf kann dies so aussehen, dass die aktuell ermittelten charakteristischen Strukturparameter für die Kristallgüte zunächst den charakteristischen Elektroparametern für die elektrischen Eigenschaften der Solarzelle für den entsprechenden Halbleiterschichttyp zugeordnet werden. In Zweifels- und Grenzfällen kann dann noch eine Zuordnung zu den charakteristischen Elektronikparametern für die elektronischen Eigenschaften der erzeugten Absorberschicht des entsprechenden Halbleiterschichttyp durchgeführt werden.

Für die Gütebeurteilung der strukturellen und elektronischen Eigenschaften einer Halbleiterschicht und der elektrischen Eigenschaften der Solarzelle stehen unterschiedliche Parameter zur Verfügung. Gemäß einer nächsten Erfindungsausgestaltung kann das beanspruchte zerstörungsfreie Analyseverfahren mit einer Ermittlung der Halbwertsbreite als charakteristischem Strukturparameter für die Kristallgüte der Absorberschicht, mit einer Vorgabe der Leerlaufspannung, des Wirkungsgrades oder des Füllfaktors als charakteristischem Elektroparameter für die elektrische Güte der Solarzelle und mit einer Vorgabe der Defektdichte als charakteristischem Parameter für die elektronische Güte der Halbleiterschicht durchgeführt werden. Durch die Rückbeziehung der elektrischen Eigenschaften der Solarzelle und elektronischen Eigenschaften der hergestellten Absorberschicht auf deren strukturelle Eigenschaften ergeben sich Korrelationen von beispielsweise der Leerlaufspannung und der Defektdichte zur Halbwertsbreite der hergestellten Absorberschicht. Wie oben bereits ausgeführt, ist insbesondere die Halbwertsbreite, die sich aus der Auswertung der Ramandaten ergibt, ein aussagekräftiger charakteristischer Parameter für die erzeugte Kristallqualität. Es gilt : je kleiner die Halbwertsbreite ist, desto besser ist die Kristallinität der Halbleiterschicht. Somit kann in Abhängigkeit hiervon direkt über die Eignung oder Nicht-Eignung einer hergestellten Halbleiterschicht für eine Weiterverarbeitung entschieden werden. Dabei ist es gemäß einer nächsten Erfindungsfortführung vorteilhaft, wenn eine Angabe eines Grenzwertes für die charakteristischen Strukturparameter für die Kristallgüte der Absorberschicht vorliegt. Das Prüfungsergebnis resultiert dann nur noch aus einem einfachen Zahlenwertvergleich. Weiterhin ist es vorteilhaft, wenn nach einer anderen Erfindungsausgestaltung eine automatisierte Erfassung, Speicherung und Korrelation der aktuellen Messdaten erfolgt. Dadurch wird ein zeitlich optimierte und fehlerfreie Analyse der hergestellten Halbleiterschicht ermöglicht. Insbesondere durch die Art der zerstörungsfreien Analyse mittels Ramanspektroskopie und durch deren schnelle und automatisierbare Durchführbarkeit ist es für spezielle Anwendungen des Analyseverfahrens nach der Erfindung besonders vorteilhaft, wenn als Anwendung eine Integration des Analyseverfahrens in eine Fertigungslinie einer Solarzelle vorgesehen ist. Es erfolgt also in-situ im Fertigungsprozess einer Solarzelle eine Qualitätskontrolle mittels einer ex-situ nach der Herstellung der Absorberschicht vorgenommenen Ramanspektroskopie vor der Weiterverarbeitung der Absorberschicht. Damit ist das beanspruchte Analyseverfahren auch für moderne Fertigungsprozesse mit aussagekräftigen Analyseergebnissen anwendbar und aufgrund seiner Einfachheit kostengünstig umsetzbar.

Der Einfluss der Analyseergebnisse auf die weitere Behandlung einer aktuell hergestellten Absorberschicht ist insbesondere auch aus ökonomischer Sicht bedeutsam. Hohe Ausschussraten bei den fertigprozessierten Solarzellen und nach der Qualitätskontrolle an einer als schlecht erkannten Absorberschicht durchgeführte Prozessschritte können so vermieden werden. Material und Zeit können eingespart werden. Insbesondere kommen diese Vorteile zum Tragen, wenn nach einer weiteren Anwendung das zerstörungsfreie Analyseverfahren zur Güteermittlung einer Solarzelle mit einer Absorberschicht aus einem polykristallinen, heteroverbundenen Halbleitermaterial herangezogen wird. Dadurch ergibt sich beispielsweise die Möglichkeit, frühzeitig die Güte von polykristallinen Dünnschichtsolarzellen aus ternären oder quaternären Halbleitermaterialien in Hinblick auf die Qualität der aktiven Absorberschicht zu beurteilen, um diese dann im Bedarfsfalle sofort nach deren Präparation aus der Fertigungslinie herauszunehmen. Bei den fertigprozessierten Solarzellen hingegen ist die geforderte hohe Qualität bezüglich der elektrischen Eigenschaften nahezu garantiert. Weiterhin kann das beanspruchte Analyseverfahren zur Güteermittlung einer Solarzelle mit unterschiedlich hergestellten Absorberschichten herangezogen werden. Damit können die zu untersuchenden Absorberschichten bzw. Proben aus verschiedenen Herstellungsverfahren stammen. Mit der Erfindung wird somit ein universelles Analyseverfahren für die prognostizierende Qualitätskontrolle von Solarzellen zur Verfügung gestellt, das nicht auf einen Herstellungstyp für die Absorberschicht beschränkt ist, sondern auf verschiedene Herstellungsverfahren angewendet werden kann.

Im Folgenden werden zum weiteren Verständnis der Erfindung in den einzelnen **Figuren** gezeigte Diagramme näher erläutert. Dabei zeigt :
- **Figur 1**: Ramanspektren bei unterschiedlichen Leerlaufspannungen,
- **Figur 2**: eine Korrelation zwischen der Halbwertsbreite und der Leerlaufspannung,
- **Figur 3**: eine Korrelation zwischen der Halbwertsbreite und dem Füllfaktor und
- **Figur 4**: eine Korrelation zwischen der Halbwertsbreite und der Defektdichte.

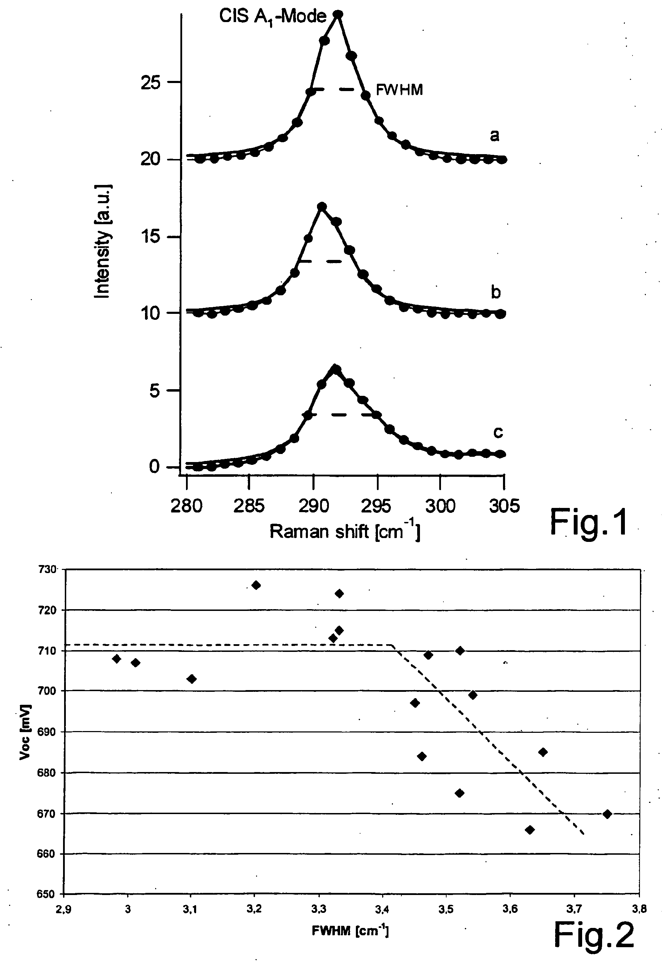

Im Diagramm gemäß **Figur 1** sind verschiedene Ramanspektren dargestellt. Aufgetragen ist die Streuintensität der bestrahlten Halbleiterschicht ("Intensity" a.u.) über der Wellenzahl ("Raman shift" in cm⁻¹). Die Auswertemethode dieser Spektren basiert auf einer mathematischen Funktion (durchgezogene Linie), die zum Anfitten der Originaldaten benutzt wird (Linie mit Punkten). Aufgenommen wurden die Ramanspektren für ein Halbleitermaterial vom Typ Kupfer-Indium-Disulfid (CIS A₁-Mode, CuInS₂). Das Spektrum a ergibt sich, wenn an der Probe durch Strom-Spannungs-Messung eine Leerlaufspannung von 752 mV ermittelt wird. Analog dazu bei anderen Stöchiometrien liegt beim Spektrum b eine Leerlaufspannung von 715 mV und beim Spektrum c eine Leerlaufspannung von 685 mV vor. Die gestrichelte waagerechte Linie in den Ramanspektren stellt die Halbwertsbreite (FWHM) als charakteristischen Parameter für die Kristallgüte des Halbleitermaterials dar.

Die Vorgehensweise zur Durchführung des Analyseverfahrens nach der Erfindung ist hier anhand eines Beispiels für CuInS₂ erläutert. Ebenso existieren jedoch auch Zusammenhänge bezüglich der Temperatur und beispielsweise dem Cu/In- Verhältnis, die analog dokumentiert werden können. Mit dem Analyseverfahren nach der Erfindung kann eine Absorberschicht direkt nach der Absorberpräparation mit Ramanspektroskopie untersucht werden. Aus dem ermittelten Wert für einen charakteristischen strukturellen Parameter kann dann auf die zu erwartende Qualität der fertigprozessierten Solarzelle bezüglich ihrer elektrischen Eigenschaften geschlossen werden. Dies ermöglicht es nun, die Produktion im Falle einer Überschreitung eines Grenzwertes zu stoppen. Es kann beispielsweise eine Neubestimmung der stöchiometrischen Verhältnisse in der Materialzusammensetzung oder eine Neueinstellung der Verfahrenstemperatur vorgenommen werden. Eine Überprüfung der danach entsprechend prozessierten Absorberschicht mit Ramanspektroskopie gibt dann Auskunft über die Wirksamkeit der ergriffenen Maßnahmen. Im Falle einer Unterschreitung des Grenzwertes weist die Absorberschicht ohne Korrekturmaßnahmen die für die angestrebte elektrische Güte der Solarzelle erforderliche Strukturgüte auf und kann in der Fertigungslinie sofort weiterverarbeitet werden. Eine fehlerhafte Absorberpräparation kann ausgeschlossen werden.

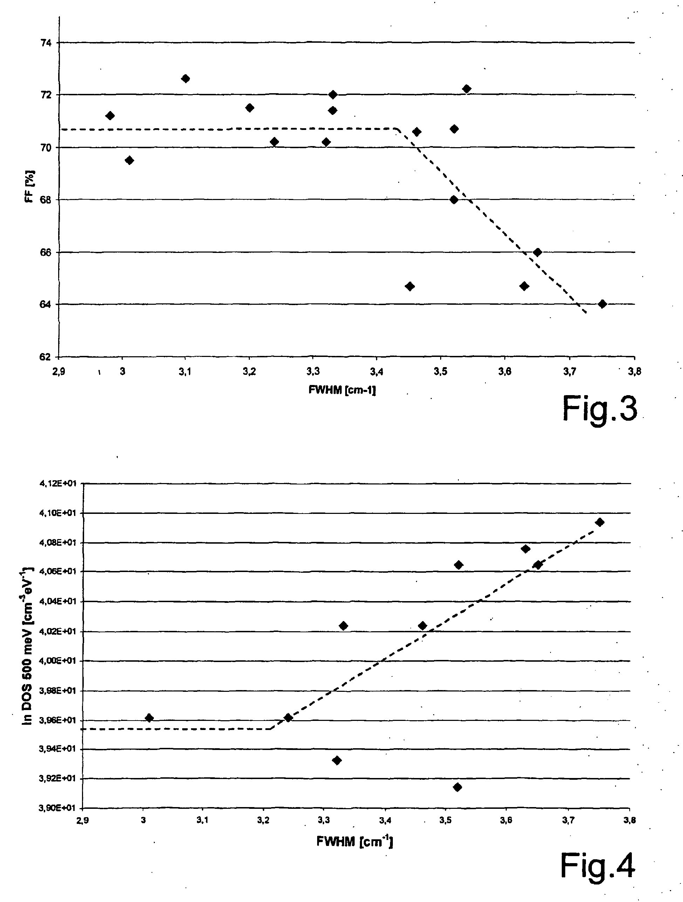

In den Diagrammen gemäß der Figuren 2 und 3 ist der Zusammenhang zwischen dem aus der Ramanspektroskopie gewonnenen charakteristischen Parameter für die Kristallqualität (Halbwertsbreite FWHM) zu den elektrischen Eigenschaften der untersuchten Solarzellen dargestellt. In **Figur 2** ist der Zusammenhang zwischen der Halbwertsbreite FWHM und der Leerlaufspannung (V_{OC} in mV) als charakteristischem Elektroparameter für die elektrischen Eigenschaften der Solarzelle dargestellt. Deutlich ist eine Tendenz zu erkennen (gestrichelte Kurve). Bis zu einem Grenzwert FWHM von ungefähr 3,4 cm⁻¹ ist ein Sättigungsbereich mit einer hohen Leerlaufspannung V_{OC} zu erkennen. Absorberschichten des genannten Typs CIS zeigen also bis zu einer Halbwertsbreite von ungefähr 3,4 cm⁻¹ eine Korrelation mit einer befriedigend hohe Leerlaufspannung V_{OC} der entsprechenden Solarzelle und damit eine für eine Weiterverarbeitung ausreichend hohe kristalline Qualität. Ab dieser bestimmten Halbwertsbreite jedoch wird die Leerlaufspannung V_{OC} mit einer breiter werdenden Halbwertsbreite rapide schlechter. Absorberschichten mit Halbwertsbreiten in diesem Bereich würden also aufgrund unzureichender Strukturgüte aussortiert werden, da sie zu niedrige Leerlaufspannungen in der fertigprozessierten Solarzelle hervorrufen würden.

In der **Figur 3** ist ein Diagramm mit einem zum Diagramm gemäß Figur 2 ähnlichem Trend aufgezeigt, allerdings ist hier der Füllfaktor (FF in %) als weiterer relevanter Elektroparameter für die elektrischen Eigenschaften einer Solarzelle über der Halbwertsbreite (FWHM in cm⁻¹) der Absorberschicht aufgetragen. Der Entscheidungsweg als Ergebnis der Ramanspektroskopie verläuft analog zu dem gemäß Figur 1 erläuterten Entscheidungsweg. Folglich können in Abhängigkeit von der aktuell ermittelten Halbwertsbreite einer hergestellten Absorberschicht problemlos verschiedene charakteristische Parameter für die elektrischen Eigenschaften der fertigen Solarzelle, abgeleitet werden. Außerdem können sie zur gegenseitigen Verifizierung der Gütebeurteilung aufgrund der aktuell ermittelten Halbwertsbreite der Absorberschicht herangezogen werden. Eine Zuordnung zum Wirkungsgrad einer Solarzelle als charakteristischem Elektroparameter für die elektrischen Eigenschaften ist ebenfalls möglich und erfolgt in analoger Weise.

Während in den beiden Diagrammen gemäß Figur 2 und 3 der Zusammenhang zwischen den strukturellen und den elektrischen Eigenschaften einer Halbleiterschicht dargestellt ist, zeigt das Diagramm gemäß **Figur 4** den Zusammenhang von Ramanspektroskopie mit den elektronischen Eigenschaften einer Halbleiterschicht, die als Absorberschicht eingesetzt werden kann. Diese wurden aus Admittanzmessungen ermittelt. Als charakteristischer Elektronikparameter für die elektronischen Eigenschaften ist hier die Defektdichte (In DOS 500 meV in cm⁻³eV⁻¹) logarithmisch über der Halbwertsbreite (FWHM in cm⁻¹) aufgetragen. Auch hier ist eine linearer Zusammenhang mit einem Grenzwertverhalten zwischen den Eigenschaften zu erkennen. Ab einem bestimmten Grenzwert FWHM, der allerdings unterhalb des FWHM-Grenzwertes für die elektrischen Eigenschaften liegt, ist ein deutlicher Anstieg in der Defektdichte mit zunehmender FWHM zu erkennen. Das Vorgehen zur Güteprognostizierung über die elektronischen Eigenschaften erfolgt analog zum Vorgehen bei der Beurteilung der elektrischen Eigenschaften. Beide Güteauswahlverfahren, elektrisch und elektronisch, können zur gegenseitigen Bestätigung herangezogen werden.

### Bezugzeichenliste

- CIS: Kupfer-Indium-Disulfid
- FWHM: Halbwertsbreite
- Voc: Leerlaufspannung
- FF: Füllfaktor
- DOS: Defektdichte

## Patentansprüche

1. Zerstörungsfreies Analyseverfahren zur Güteermittlung einer heteroverbundenen kristallinen Solarzelle auf Chalkopyritbasis mittels einer Datenkombination aus einer optischen Ramanspektroskopie zur Ermittlung der strukturellen Eigenschaften einer Halbleiterschicht und zumindest aus einer elektrischen Strom-Spannungs-Messung unter Beleuchtungseinfluss zur Ermittlung der elektrischen Eigenschaften einer Solarzelle, wobei direkt nach der Erzeugung der halbleitenden Absorberschicht der Solarzelle lediglich mit Hilfe der Ramanspektroskopie charakteristische Strukturparameter für die kristallinen Eigenschaften ermittelt werden, die grafisch oder numerisch mit charakteristischen Elektroparametern, die aus Messungen an Materialproben vom gleichen Typ der Absorberschicht bekannt sind, korreliert und in Abhängigkeit von bekannten Grenzwerten für die charakteristischen Strukturparameter ausgewertet werden.

2. Zerstörungsfreies Analyseverfahren nach Anspruch 1 mit einer zusätzlichen Datenkombination aus einer Admittanzspektroskopie unter Temperatureinfluss zur Ermittlung der elektronischen Eigenschaften einer Halbleiterschicht, wobei die ermittelten charakteristischen Strukturparameter grafisch oder numerisch mit charakteristischen Elektroparametern, die aus Messungen an Materialproben vom gleichen Typ der Absorberschicht bekannt sind, korreliert und überprüft werden.

3. Zerstörungsfreies Analyseverfahren nach Anspruch 1 oder 2 mit einer Ermittlung der Halbwertsbreite (FWHM) der Raman-Hauptmode A1 als charakteristischem Strukturparameter, mit einer Vorgabe der Leerlaufspannung (V_{OC}), des Wirkungsgrades oder des Füllfaktors (FF) als charakteristischem Elektroparameter und mit einer Vorgabe der Defektdichte (DOS) als charakteristischem Elektronikparameter.

4. Zerstörungsfreies Analyseverfahren nach einem der Ansprüche 1 bis 3 mit einer automatisierten Erfassung, Speicherung und Korrelation der gemessenen Strukturparameter und der bekannten Elektro- und Elektronikparameter

## Claims

1. Non-destructive analysis method for determining the quality of a chalcopyrite-based, hetero-junction, crystalline solar cell by means of a combination of data from optical Raman spectroscopy in order to determine the structural properties of a semiconductor layer and at least from an electrical current-voltage measurement under the influence of illumination in order to determine the electrical properties of a solar cell, wherein directly after the production of the semiconductive absorber layer of the solar cell merely with the aid of Raman spectroscopy characteristic structural parameters are determined for the crystalline properties that are correlated graphically or numerically with characteristic electro-parameters, which are known from measurements on material samples of the same type of absorber layer, and are evaluated as a function of known limiting values for the characteristic structural parameters.

2. Non-destructive analysis method according to claim 1 having an additional combination of data from admittance spectroscopy under the influence of temperature in order to determine the electronic properties of a semiconductor layer, wherein the characteristic structural parameters that are determined are correlated graphically or numerically with characteristic electro-parameters, which are known from measurements on material samples of the same type of absorber layer, and are examined.

3. Non-destructive analysis method according to claim 1 or 2 with determination of the half-value width (FWHM) of the main Raman mode A1 as a characteristic structural parameter, with predetermination of the noload voltage (V_{oc}), of the degree of efficiency or of the filling factor (FF) as a characteristic electro-parameter, and with predetermination of the defect-density (DOS) as a characteristic electronics parameter.

4. Non-destructive analysis method according to one of claims 1 to 3, having automated detection, storage and correlation of the measured structural parameters and the known electro-parameters and electronics parameters.

## Revendications

1. Procédé d'analyse non destructif pour déterminer la qualité d'une pile solaire cristalline à combinaison hétérogène à base de chalcopyrite, à l'aide d'une combinaison de données provenant d'une spectroscopie optique de Raman, pour déterminer les propriétés de structure d'une couche semi-conductrice, et d'au moins une mesure électrique intensité/tension, dans des conditions d'éclairage, pour déterminer les propriétés électriques d'une pile solaire, selon lequel
on détermine les paramètres caractéristiques de la structure pour les propriétés cristallines, directement après avoir réalisé la couche absorbante semi-conductrice de la pile solaire, uniquement à l'aide de la spectroscopie de Raman,
on met en corrélation avec les paramètres électriques caractéristiques, graphiques ou numériques résultant de mesures effectuées sur des échantillons de matière du même type de la couche absorbante, et
on exploite les paramètres de structure caractéristiques, en fonction des valeurs limites connues.

2. Procédé d'analyse non destructif selon la revendication 1 avec une combinaison supplémentaire de données provenant d'une spectroscopie d'admittance sous l'influence de la température pour déterminer les propriétés électroniques d'un couche semi-conductrice, selon lequel
on met en corrélation et on vérifie les paramètres de structure caractéristiques obtenus avec des paramètres électriques caractéristiques d'origine graphique ou numérique, connus à partir de mesures effectuées sur des échantillons de matière du même type de couche absorbante.

3. Procédé d'analyse non destructif selon la revendication 1 ou 2, comprenant la détermination de la demi-largeur (FWHM) du mode Raman principal A1 comme paramètre de structure caractéristique, en prédéfinissant la tension de marche à vide (Voc), le rendement ou le taux de remplissage (FF) comme paramètres électriques caractéristiques et en prédéfinissant la densité de défaut (DOS) comme paramètre électronique caractéristique.

4. Procédé d'analyse non destructif selon les revendications 1 à 3, comprenant la saisie, la mise en mémoire et la corrélation automatiques des paramètres de structure mesurés et des paramètres électriques et électroniques connus.
